# FASCICULE DE BREVET EUROPEEN

(11) **EP 3 747 968 B1**
(45) Date de publication et mention de la délivrance du brevet: **29.07.2026**
(21) Numéro de dépôt: 20178791.8
(22) Date de dépôt: 08.06.2020
(51) Int. Cl.: C09J 7/38

(54) **PROCÉDÉ DE DÉPÔT DE GRAFFITI SUR UN SUPPORT**
VERFAHREN ZUM ANBRINGEN EINES GRAFFITIS AUF EINEM TRÄGER
METHOD FOR DEPOSITING A GRAFFITI ON A SUPPORT

(30) Priorité: 06.06.2019 FR 1906016
(43) Date de publication de la demande: 09.12.2020
(73) Titulaire: PLASTIGRAFF, 78100 Saint-Germain-en-Laye (FR)
(72) Inventeur: EVEILLE, Arnaud, 78100 Saint-Germain-en-Laye (FR)
(74) Mandataire: Icosa

(56) Documents cités:
- EP-A1- 2 351 892
- WO-A1-2005/044558
- FR-A1- 2 356 702
- FR-A1- 2 984 344

## Description

### DOMAINE DE L'INVENTION

La présente invention concerne un procédé de dépôt de graffiti sur un support, ledit procédé comprenant la fourniture d'un film polymérique consistant en un polymère non-fluoré ou comprenant un polymère non fluoré, une finition mate ou brillante et/ou des pigments colorés et/ou des pigments phosphorescents, ledit film polymérique comprenant une première face autoadhésive destinée à être appliqué sur au moins une surface d'un objet ou d'un bâtiment et une seconde face destinée à recevoir une couche de graffiti.

### ÉTAT DE LA TECHNIQUE

Née dans les années 60 outre-Atlantique, l'expression artistique de rue et notamment le mouvement graffiti a réellement pris de l'ampleur à partir des années 70. Rapidement, inscriptions et dessins firent leur apparition sur les bâtiments, boîtes aux lettres, cabines téléphoniques, tunnels, bus et rames de métro.

Néanmoins, du fait de leur caractère permanent, des problèmes liés aux dégradations du mobilier urbain ou encore au coût d'effacement de ces inscriptions sont rapidement apparus, contribuant à donner une vision négative de ce genre d'expression, qualifiée aujourd'hui de vandalisme, et entrainant une stigmatisation des graffeurs dans leur ensemble. Les collectivités locales ont ainsi dû s'adapter et trouver des solutions pour lutter contre ces dégradations.

Des films polymériques autoadhésifs sont connus de l'art antérieur dans des applications comme support de décoration et/ou communication visuelle, ou comme protection sur des objets habituellement victimes de malveillance, tels que des trains, bus ou autres véhicules.

Les documents EP 2351892, WO 2014133834 et WO 2014186135 décrivent par exemples des films décoratifs autoadhésifs multicouches imprimables, destinés à être utilisés sur des surfaces externes de véhicules roulant. Cependant, présentant une couche de protection anti-graffitis en surface, ces films ne sont pas aptes à être utilisés comme support d'expression libre, bien au contraire.

Ainsi, un réel besoin se fait ressentir d'apporter une alternative à tous les acteurs du mouvement graffiti afin de pouvoir s' exprimer par la peinture de rue, sans causer de gêne ni de dégradation, et ainsi valoriser leur image.

La présente invention a pour but de répondre à ce besoin, en proposant un film polymérique permettant d'allier la culture éphémère du graffiti et la possibilité pour les entreprises et collectivités de valoriser leur patrimoine, le temps d'un événement et permettre aux artistes d'exprimer leur art dans des lieux impossible à peindre, tel que des monuments historiques gérés par le centre des monuments nationaux (CMN).

Des exemples d'art antérieur peuvent être trouvés dans EP 2 351 892, FR 29 84344, WO 2005/044558 et FR 23 56702.

De par le caractère autoadhésif du film, l'utilisation du film selon la présente invention est particulièrement aisée et accessible à tout type d'utilisateurs, amateurs ou professionnels. Notamment, la pose du film sur différents types de surfaces est très simple, de même que le retrait du film lorsque l'œuvre doit être retirée. La seconde face est faite d'un matériau particulièrement approprié pour le dépôt d'une peinture, de sorte que la qualité des œuvres n'est pas affectée par l'utilisation d'un tel support.

### RÉSUMÉ

La présente invention concerne un procédé de dépôt de graffiti sur un support, ledit procédé comprenant les étapes suivantes : a) fourniture d'un film polymérique i) consistant en au moins un polymère non-fluoré, ou ii) comprenant un polymère non-fluoré, une finition mate ou brillante et/ou des pigments colorés et/ou des pigments phosphorescents, ledit film polymérique comprenant une première face autoadhésive et une seconde face b) application de la première face autoadhésive sur au moins une surface d'un objet ou d'un bâtiment par un utilisateur, c) dépôt d'une couche de graffiti sur la seconde face par un utilisateur, et d) optionnellement, détachement dudit film polymérique de ladite surface par un utilisateur.

Dans un mode de réalisation, ledit polymère non-fluoré est choisi parmi les polyesters, les polycarbonates, les polyuréthanes, les polyacryliques et les chloropolymères. Dans un mode de réalisation, ledit polymère non-fluoré est le polyéthylène téréphtalate (PET). Dans un mode de réalisation, ledit polymère non-fluoré est le polychlorure de vinyle (PVC).

Dans un mode de réalisation, ladite première face autoadhésive est enduite d'une couche d'un adhésif sensible à la pression comprenant un polymère choisi parmi les polyacryliques.

Dans un mode de réalisation, ladite première face autoadhésive est chargée électrostatiquement.

Dans un mode de réalisation ladite seconde face est recouverte d'un imprimé destiné à être recouvert d'une couche de graffiti.

Dans un mode de réalisation ledit film polymérique est transparent et/ou dans laquelle ladite seconde face n'est pas recouverte d'un imprimé ou d'une couche protectrice.

Dans un mode de réalisation, ladite première face autoadhésive est destinée à être appliquée sur des surfaces planes choisies parmi les surfaces vitrées telles que les surfaces en verre, les façades de bâtiments telles que les façades en béton, les murs tels que les murs en ciment, les plaques en plâtre, les plaques en bois et les plaques cartonnées.

Dans un mode de réalisation, ladite première face autoadhésive est destinée à être appliquée sur des surfaces tridimensionnelles choisies parmi les engins mobiles, les façades de bâtiments, les murs en briques, les murs en pierres, les escaliers, les boîtes aux lettres et les poubelles.

Dans un mode de réalisation, le procédé comprend en outre une étape de découpage dudit film polymérique.

Dans un mode de réalisation, le procédé comprend en outre une étape d'application par un utilisateur de ladite première face autoadhésive sur une nouvelle surface et/ou application d'un film protecteur sur ladite couche de graffiti ou une étape de mise sous cadre dudit film polymérique.

### DÉFINITIONS

Dans la présente invention, les termes ci-dessous sont définis de la manière suivante :
- **"Autoadhésif"** concerne toute matière dont une face est couverte d'un produit adhérant sans mouillage par simple pression. Au sens de l'invention, ladite première face autoadhésive est autoadhésive parce qu'elle est recouverte d'un adhésif sensible à la pression (ASP). Au sens de l'invention, ladite première face autoadhésive est autoadhésive parce qu'elle est chargée électrostatiquement.
- **"Allongement à la rupture"** concerne la capacité d'un matériau à s'allonger avant de rompre lorsqu'il est sollicité en traction. Noté A% c'est une caractéristique sans dimension des matériaux. A% se détermine par un essai de traction.
- **"Film"** concerne une feuille de matériau non-métallique avec une épaisseur inférieure à 1 mm, de préférence inférieur à 0,5 mm.
- **"Force d'adhésion"** concerne la force de pelage après 24H d'application du film autoadhésif sur une surface support. Exprimée en N/m, elle est mesurée selon la norme NF EN 2810-2 ou ISO 8510-2. Au sens de l'invention, on considère qu'un film présente une force d'adhésion suffisante pour ne pas se décoller seul de son support et pas trop forte pour qu'il puisse être enlevé par un utilisateur, si sa force d'adhésion est inférieure à 2000 N/m, de préférence inférieure à 1200 N/m.
- **"Graffiti"** concerne une forme de communication et d'expression artistique représentant généralement un personnage, un paysage, un ensemble de lettres, une marque et/ou une signature. Le graffiti est une technique d'art de rue consistant en un dessin ou une inscription peinte, tracée ou gravée sur des biens publics ou privés, des monuments, des murs ou sur tout autre support qui n'est habituellement pas utilisé dans cette optique. Par extension, « graffiti » englobe une œuvre qui reprend les mêmes codes artistiques, même si elle est réalisé sur un autre support. Au sens de l'invention, le graffiti consiste en une inscription ou un dessin réalisé par un utilisateur sur un support à l'aide d'un de feutres, Marker ou bombes de peintures acrylique ou à l'eau.
- **"Grammage"** concerne la force du film, correspondant à sa masse surfacique calculé en g/m². Le film sera d'autant plus souple que son grammage est faible.
- **"Liner"** concerne un film non collant ou de préférence une feuille de papier revêtue d'une couche antiadhésive destiné à recouvrir et protéger ladite couche adhésive à la surface dudit film polymérique avant son application.
- **"Peinture"** concerne une matière colorante composée d'un pigment ou d'un colorant, d'un liant et optionnellement d'un solvant, utilisée pour recouvrir une surface et destinée à être appliquée par un utilisateur (généralement un être humain tel qu'un humain adulte ou un humain enfant). Au sens de l'invention, le terme **"peinture"** n'inclut notamment pas les encres servant à imprimer. Au sens de l'invention, le terme **"peinture"** n'inclut notamment pas les matières colorantes destinées à être appliquées par une machine.
- **"Phosphorescence"** concerne le phénomène observé lorsqu'une matière continue à émettre de la lumière après avoir été éclairée. Au sens de l'invention, l'ajout de **"pigments phosphorescents"** donne la capacité au film polymérique autoadhésif d'emmagasiner de la lumière pendant la journée et de la restituer ensuite petit à petit dans l'obscurité, mettant ainsi en valeur les œuvres réalisées au graffiti.
- **"Pigments colorés"** concerne des substances chimiques, d'origine minérale ou organique, naturel ou synthétique, colorante, insoluble dans le milieu qu'elle colore. Une fois incorporés dans la masse du film polymérique, ils permettent de le colorer.
- **"Polymère"** concerne un matériau à base de carbone qui est fait à partir de macromolécules, c'est-à-dire de molécules constituées de la répétition d'unités plus petites (monomères). Le choix des monomères et le poids moléculaire final du polymère décident les propriétés physiques et mécaniques du polymère final.
- **"Polymère non-fluoré"** concerne un polymère comprenant moins de 1% de monomère fluoré (c'est-dire un monomère comprenant au moins un atome de fluor), préférentiellement moins de 0,1%, plus préférentiellement moins de 0,01%, encore plus préférentiellement 0%.
- **"Résistance à la traction"** concerne la capacité d'un matériau à résister à des charges de traction. Exprimée en N/m, elle est égale à la contrainte maximale que subit le matériau dans un essai de traction. Au sens de l'invention, on considère qu'un film est suffisamment étirable manuellement et peut être posé sur une surface courbe ou anguleuse si son allongement à la rupture est supérieur à 100 % et sa résistance de traction inférieure à 6000 N/m

### DESCRIPTION DÉTAILLÉE

La présente invention concerne un procédé de dépôt de graffiti sur un support comprenant les étapes suivantes : a) fourniture d'un film polymérique i) consistant en un polymère non-fluoré ou ii) comprenant un polymère non-fluoré, une finition mate ou brillante et/ou des pigments colorés et/ou des pigments phosphorescents, ledit film polymérique comprenant une première face autoadhésive et une seconde face b) application par un utilisateur d'une première face autoadhésive sur au moins une surface d'un objet ou d'un bâtiment par un utilisateur, c) dépôt d'une couche de peinture sur une seconde face par un utilisateur, et d) optionnellement, détachement dudit film polymérique de ladite surface par un utilisateur

Selon un mode de réalisation ledit film polymérique n'est pas un complexe multicouche.

Selon un mode de réalisation ledit film polymérique est un film monocouche comprenant une première face autoadhésive et une seconde face destinée à recevoir une couche de graffiti. Selon un mode de réalisation, le polymère non-fluoré est choisi parmi les polyesters, les polycarbonates, les polyuréthanes, les polyacryliques et les chloropolymères, préférentiellement le polyéthylène téréphtalate (PET) et le polychlorure de vinyle (PVC).

Dans un mode de réalisation le polymère non-fluoré est du polyéthylène téréphtalate (PET).

Dans un mode de réalisation préféré, le polymère non-fluoré et du polychlorure de vinyle (PVC). Ce mode de réalisation est avantageux pour permettre à un utilisateur d'appliquer ledit film polymérique sur une surface plane ou tridimmensionnelle et récupérer ledit film après avoir appliqué une couche de graffiti sans l'endommager.

Dans un mode de réalisation, ledit film polymérique présente une épaisseur comprise entre 25 µm et 150 µm. Dans un mode de réalisation, ledit film polymérique présente une épaisseur comprise entre 30 µm et 80 µm. Dans un mode de réalisation préféré, ledit film polymérique présente une épaisseur comprise entre 50 µm et 80 µm.

Dans un mode de réalisation, ledit film polymérique présente un grammage compris entre 50 g/m² et 200 g/m². Dans un mode de réalisation, ledit film polymérique présente un grammage compris entre 60 g/m² à 170 g/m².

Dans un premier mode de réalisation, ladite première face autoadhésive est recouverte d'un adhésif sensible à la pression. Dans un mode de réalisation, ledit adhésif sensible à la pression est un polymère choisi parmi les polyacryliques.

Dans un mode de réalisation, ladite couche d'un adhésif présente une épaisseur de 15 µm à 50 µm, de préférence de 20 µm à 40 µm. Dans un mode de réalisation, ladite première face autoadhésive présente une force d'adhésion inférieure à 2000 N/m, de préférence inférieur à 1200 N/m.

Dans un second mode de réalisation, ladite première face autoadhésive n'est pas recouverte d'une couche d'un adhésif. Dans un mode de réalisation, ladite première face autoadhésive est chargée électrostatiquement. Ce mode de réalisation est avantageux pour permettre à l'utilisateur une application dudit film polymérique sur une surface vitrée et pouvoir le retirer et/ou le repositionner sans laisser de trace de colle.

Selon un mode de réalisation, ledit film polymérique présente un allongement à la rupture supérieur à 50 %, de préférence supérieur à 100 %. Dans un mode de réalisation, ledit film polymérique présente une résistance à la traction inférieure à 6000 N/m, de préférence inférieur à 5000 N/m.

Selon un mode de réalisation, ledit film polymérique est protégé par un liner sur ladite première face autoadhésive. Dans un mode de réalisation, ledit liner est choisi parmi les papiers krafts ou les glassines.

Dans un mode de réalisation, ledit film polymérique est conditionné sous la forme de bobine de longueur de 1 à 5000 m, et de largeur de 615 m à 2000 m.

Selon un mode de réalisation, ledit film polymérique est partiellement ou complètement transparent. Ce mode de réalisation est avantageux pour donner à l'utilisateur la sensation de peindre directement sur des objets ou bâtiments sur lesquels il est interdit de peindre (tableau, monument historique, etc.), alors que ce n'est pas le cas en réalité.

Selon un mode de réalisation, ledit film polymérique comprend en outre une finition mate. Dans un mode de réalisation, ledit film polymérique comprend en outre une finition brillante.

Dans un mode de réalisation, ledit film polymérique comprend en outre des pigments colorés. Ce mode de réalisation est avantageux pour permettre à l'utilisateur de choisir un fond coloré prêt à l'emploi.

Dans un mode de réalisation, ledit film polymérique comprend en outre des pigments phosphorescents. Ce mode de réalisation est avantageux pour une utilisation nocturne.

Dans un mode de réalisation, ledit film polymérique comprend en outre une finition mate, des pigments colorés et des pigments phosphorescents.

Dans un mode de réalisation, ledit film polymérique comprend en outre une finition brillante, des pigments colorés et des pigments phosphorescents.

Dans un mode de réalisation, ledit film polymérique autoadhésif est prédécoupé selon la forme désirée.

Dans un premier mode de réalisation, ladite seconde face est recouverte d'un imprimé destiné à être recouvert d'une couche de graffiti. Ce mode de réalisation est idéal pour l'apprentissage ou les réalisations participatives, permettant à l'utilisateur de colorier à l'aide de feutres, Marker ou bombes de peintures acrylique ou à l'eau, en suivant les contours d'une esquisse imprimée.

Dans un mode de rélisation, ladite seconde face recouverte d'un inprimé est recouverte d'une couche protectrice en PET, ladite couche protectrice étant destiné à recevoir une couche de graffiti. Ce mode de réalisation est avantageux pour permettre à utilisateur d'effacer la couche de graffiti après application afin d'apliquer une nouvelle couche de graffiti.

Dans un second mode de réalisation, ladite seconde face n'est pas recouverte d'un imprimé.

Dans un mode de réalisation, ladite seconde face n'est pas recouverte d'une couche protectrice. Dans un mode de réalisation, ladite seconde face n'est pas recouverte d'une couche protectrice imprimée.

Selon un mode de réalisation, ladite première face autoadhésive est destinée à être appliquée sur des surfaces planes. Selon un mode de réalisation, ladite première face autoadhésive est appliquée sur des surfaces planes. Dans un mode de réalisation, ladite première face autoadhésive est appliquée sur des surfaces vitrées telles que des surfaces en verre. Dans un mode de réalisation, ladite première face autoadhésive est appliquée sur des façades de bâtiments telles que des façades en béton. Dans un mode de réalisation, ladite première face autoadhésive est appliquée sur des murs tels que des murs en ciment. Dans un mode de réalisation, ladite première face autoadhésive est appliquée sur des plaques en plâtre. Dans un mode de réalisation, ladite première face autoadhésive est appliquée sur des plaques en bois. Dans un mode de réalisation, ladite première face autoadhésive est appliquée sur des plaques cartonnées.

Selon un mode de réalisation, ladite première face autoadhésive est destinée à être appliquée sur des surfaces tridimensionnelles. Selon un mode de réalisation, ladite première face autoadhésive est appliquée sur des surfaces tridimensionnelles. Dans un mode de réalisation, ladite première face autoadhésive est appliquée sur des engins mobiles tels que des trains, bus, voitures, bateaux ou des avions. Dans un mode de réalisation, ladite première face autoadhésive est appliquée sur des façades de bâtiments. Dans un mode de réalisation, ladite première face autoadhésive est appliquée sur des murs en briques. Dans un mode de réalisation, ladite première face autoadhésive est appliquée sur des murs en pierres. Dans un mode de réalisation, ladite première face autoadhésive est appliquée sur des escaliers. Dans un mode de réalisation, ladite première face autoadhésive est appliquée sur des boîtes aux lettres. Dans un mode de réalisation, ladite première face autoadhésive est appliquée sur des poubelles.

Selon un mode de réalisation, une raclette est utilisée pour réaliser et/ou faciliter la mise en place dudit film sur le support. Dans un mode de réalisation, ladite raclette est une raclette en feutrine.

Selon un mode de réalisation, le support, une fois utilisé, c'est-à-dire une fois la couche de graffiti appliquée, est décollé. Selon un mode de réalisation, le support, une fois utilisé, c'est-à-dire une fois la couche de graffiti appliquée, est découpé. Selon un mode de réalisation, le support, une fois utilisé, c'est-à-dire une fois la couche de graffiti appliquée, est décollé et découpé.

Selon un mode de réalisation, le support, une fois utilisé, c'est-à-dire une fois la couche de graffiti appliquée, est décollé et appliqué sur une autre surface. Selon un mode de réalisation, le support, une fois utilisé, c'est-à-dire une fois la couche de graffiti appliquée, est décollé, découpé et appliqué sur une autre surface.

Selon un mode de réalisation, le support, une fois utilisé, c'est-à-dire une fois la couche de graffiti appliquée, est recouvert d'un film protecteur. Selon un mode de réalisation, le support, une fois utilisé, c'est-à-dire une fois la couche de graffiti appliquée, est décollé, appliqué sur une autre surface et recouvert d'un film protecteur. Selon un mode de réalisation, le support, une fois utilisé, c'est-à-dire une fois la couche de graffiti appliquée, est décollé, découpé, appliqué sur une autre surface et recouvert d'un film protecteur.

Selon un mode de réalisation, le film protecteur est un film de plexiglass. Dans un mode de réalisation, le film protecteur est un film en PET. Dans un mode de réalisation, le film protecteur est un film en un polymère fluoré.

Dans un autre mode de réalisation préféré, la présente invention concerne un procédé de dépôt de graffiti sur un support comprenant les étapes suivantes :
a) fourniture d'un film polymérique tel que décrit ci-dessus,
b) application par un utilisateur d'une première face autoadhésive sur au moins une surface d'un objet ou d'un bâtiment,
c) dépôt d'une couche de graffiti sur une seconde face par un utilisateur, et
d) détachement dudit film polymérique de ladite surface par un utilisateur.

Dans un mode de réalisation, le procédé comprend en outre une étape de découpage dudit film polymérique.

Dans un mode de réalisation, le procédé comprend en outre une étape d'application de ladite première face autoadhésive sur une autre surface. Dans un mode de réalisation, le procédé comprend en outre une étape d'application d'un film protecteur sur ladite couche de graffiti.

Dans un autre mode de réalisation, le procédé comprend en outre une étape de mise sous cadre dudit film polymérique, ledit cadre comprenant une structure ; une vitre de protection en PVC et un fond dur en médium ou carton compressé. Ce mode de réalisation est avantageux pour permettre à un utilisateur d'obtenir au moins un tableau de la réalisation et optionnellement la revendre.

Dans un mode de réalisation, l'utilisateur est un professionnel du graffiti. Dans un mode de réalisation, l'utilisateur n'est pas un professiennel du graffiti. Dans un mode de réalisation, l'utilisateur est une personne adulte. Dans un mode de réalisation, l'utilisateur est un enfant. Dans un mode de réalisation, l'utilisateur est une personne à mobilité réduite. Dans un mode de réalisation, l'utilisateur est une personne agée.

### EXEMPLES

La présente invention se comprendra mieux à la lecture des exemples suivants qui illustrent non-limitativement l'invention.

### Exemple 1 : Film polymérique autoadhésif pour surface vitrée

| **Propriétés du film** | |
|---|---|
| Polymère | PVC |
| Epaisseur (µm) | 70 |
| Grammage (g/m²) | 91 |
| Allongement à la rupture (%) | 400 |

| **Adhésif** | |
|---|---|
| Polymère | Solvant acrylique |
| Force d'adhésion (N/m) | 440 |

| **Compatibilité** | |
|---|---|
| Surface | Vitre / plexiglass |

### Exemple 2 : Film polymérique autoadhésif pour surface poreuse

| **Propriétés du film** | |
|---|---|
| Polymère | PVC |
| Epaisseur (µm) | 55 |

| **Adhésif** | |
|---|---|
| Polymère | Solvant acrylique |
| Force d'adhésion (N/m) | 960 |

| **Compatibilité** | |
|---|---|
| Surface | Briques/Béton |

### Exemple 3 : Film polymérique autoadhésif pour surface métallique

| **Propriétés du film** | |
|---|---|
| Polymère | PVC |
| Epaisseur (µm) | 50 |

| **Adhésif** | |
|---|---|
| Polymère | Solvant acrylique |
| Force d'adhésion (N/m) | 680 |

| **Compatibilité** | |
|---|---|
| Surface | Métal |

### Exemple 4 : Film polymérique autoadhésif pour surface non poreuse

| **Propriétés du film** | |
|---|---|
| Polymère | PVC |
| Epaisseur (µm) | 100 |

| **Adhésif** | |
|---|---|
| Polymère | Solvant acrylique |
| Force d'adhésion (N/m) | 480 |

| **Compatibilité** | |
|---|---|
| Surface | Surface non-poreuse |

### Résultats

Dans chacun des exemples 1 à 4 le film polymérique comprenant une première face autoadhésive présente une souplesse suffisante pour pouvoir adopter la conformation de son support, ainsi qu'un pouvoir d'adhésion assez important pour ne pas se décoller seul de son support tout en permettant à l'utilisateur de le retirer aisément. Un bon maintien de la couche de peinture est observé sur la seconde face, même après 1 semaine d'utilisation.

Ainsi, dans chacun des exemples, le film a pu être appliqué par l'utilisateur sur diverses surfaces, de manière aisée et avec une bonne adhérence de la première face autoadhésive. La couche de peinture a ensuite été déposée au moyen d'un aérosol sur la seconde face. Une fois l'évènement terminé, le film a pu être détaché aisément de la surface par l'utilisateur en ne laissant aucunes traces de dégradation sur ladite surface.

## Revendications

1. Procédé de dépôt de graffiti sur un support, ledit procédé comprenant les étapes suivantes :
a. fourniture d'un film polymérique,
i. consistant en un polymère non- fluoré, ou
ii. comprenant un polymère non-fluoré, une finition mate ou brillante et/ou des pigments colorés et/ou des pigments phosphorescents,
ledit film polymérique comprenant une première face autoadhésive et une seconde face,
b. application de la première face autoadhésive sur au moins une surface d'un objet ou d'un bâtiment par un utilisateur,
c. dépôt d'une couche de graffiti sur la seconde face par un utilisateur, et
d. optionnellement, détachement dudit film polymérique de ladite surface par un utilisateur.

2. Procédé selon la revendication **1,** dans lequel ledit polymère non-fluoré est choisi parmi les polyesters, les polycarbonates, les polyuréthanes, les polyacryliques et les chloropolymères ; préférentiellement le polyéthylène téréphtalate (PET) et le polychlorure de vinyle (PVC).

3. Procédé selon la revendication **1** ou la revendication **2,** dans lequel ladite première face autoadhésive est enduite d'une couche d'un adhésif sensible à la pression comprenant un polymère choisi parmi les polyacryliques.

4. Procédé selon l'une quelconque des revendications **1** à **3,** dans lequel ladite première face autoadhésive est chargée électrostatiquement.

5. Procédé selon l'une quelconque des revendications **1** à **4,** dans lequel ladite seconde face est recouverte d'un imprimé destiné à être recouvert d'une couche de graffiti.

6. Procédé selon l'une quelconque des revendications **1** à **5,** dans lequel ladite seconde face n'est pas recouverte d'un imprimé ou d'une couche protectrice.

7. Procédé selon l'une quelconque des revendications **1** à **6,** dans lequel ladite première face autoadhésive est appliquée sur des surfaces planes choisies parmi les surfaces vitrées telles que les surfaces en verre, les façades de bâtiments telles que les façades en béton, les murs tels que les murs en ciment, les plaques en plâtre, les plaques en bois et les plaques cartonnées.

8. Procédé selon l'une quelconque des revendications **1** à **7,** dans lequel ladite première face autoadhésive est appliquée sur des surfaces tridimensionnelles choisies parmi les engins mobiles, les façades de bâtiments, les murs en briques, les murs en pierres, les escaliers, les boîtes aux lettres et les poubelles.

9. Procédé selon l'une quelconque des revendications **1** à **8,** comprenant en outre une étape de découpage dudit film polymérique.

10. Procédé selon l'une quelconque des revendications **1** à **9,** comprenant en outre une étape d'application par un utilisateur de ladite première face autoadhésive sur une nouvelle surface et/ou une étape d'application d'un film protecteur sur ladite couche de graffiti ou une étape de mise sous cadre dudit film polymérique.

## Patentansprüche

1. Verfahren zum Aufbringen von Graffiti auf einen Träger, wobei das Verfahren die folgenden Schritte umfasst:
a. Bereitstellen einer Polymerfolie,
i. bestehend aus einem nicht fluorierten Polymer, oder
ii. umfassend ein nicht fluoriertes Polymer, eine matte oder glänzende Verarbeitung und/oder farbige Pigmente und/oder phosphoreszierende Pigmente,
wobei die Polymerfolie eine erste selbstklebende Seite und eine zweite Seite umfasst,
b. Auftragen der ersten selbstklebenden Seite auf mindestens eine Oberfläche eines Objekts oder eines Gebäudes durch einen Benutzer,
c. Aufbringen einer Graffitischicht auf der zweiten Seite durch einen Benutzer, und
d. optional Ablösen der Polymerfolie von der Oberfläche durch einen Benutzer.

2. Verfahren nach Anspruch 1, wobei das nicht fluorierte Polymer aus den Polyestern, den Polycarbonaten, den Polyurethanen, den Polyacrylen und den Chlorpolymeren; vorzugsweise Polyethylenterephthalat (PET) und Polyvinylchlorid (PVC) ausgewählt ist.

3. Verfahren nach Anspruch 1 oder Anspruch 2, wobei die erste selbstklebende Seite mit einer Schicht eines druckempfindlichen Klebstoffs beschichtet ist, der ein Polymer umfasst, das aus Polyacrylen ausgewählt ist.

4. Verfahren nach einem der Ansprüche 1 bis 3, wobei die erste selbstklebende Seite elektrostatisch aufgeladen ist.

5. Verfahren nach einem der Ansprüche 1 bis 4, wobei die zweite Seite mit einem Druck bedeckt ist, der dazu bestimmt ist, mit einer Graffitischicht bedeckt zu werden.

6. Verfahren nach einem der Ansprüche 1 bis 5, wobei die zweite Seite nicht mit einem Druck oder einer Schutzschicht bedeckt ist.

7. Verfahren nach einem der Ansprüche 1 bis 6, wobei die erste selbstklebende Seite auf flache Oberflächen aufgetragen wird, die aus Glasoberflächen wie Oberflächen aus Glas, Gebäudefassaden wie Betonfassaden, Wänden wie Zementwänden, Gipsplatten, Holzplatten und Kartonplatten ausgewählt sind.

8. Verfahren nach einem der Ansprüche 1 bis 7, wobei die erste selbstklebende Seite auf dreidimensionale Oberflächen aufgetragen wird, die unter beweglichen Maschinen, Gebäudefassaden, Ziegelwänden, Steinwänden, Treppen, Briefkästen und Mülleimern ausgewählt sind.

9. Verfahren nach einem der Ansprüche 1 bis 8, ferner umfassend einen Schritt zum Schneiden der Polymerfolie.

10. Verfahren nach einem der Ansprüche 1 bis 9, ferner umfassend einen Schritt zum Aufbringen der ersten selbstklebenden Seite auf eine neue Oberfläche durch einen Benutzer und/oder einen Schritt zum Aufbringen einer Schutzfolie auf die Graffitischicht oder einen Schritt zum Einrahmen der Polymerfolie.

## Claims

1. A method for depositing graffiti on a substrate, said method comprising the following steps:
a. providing a polymeric film,
i. consisting of a non-fluorinated polymer, or
ii. comprising a non-fluorinated polymer, a matte or glossy finish and/or colored pigments and/or phosphorescent pigments,
said polymeric film comprising a first self-adhesive face and a second face,
b. applying said first self-adhesive face to at least one surface of an object or a building by a user,
c. depositing a layer of graffiti on said second face by a user, and
d. optionally, removing said polymeric film from said surface by a user.

2. The method according to claim 1, wherein said non-fluorinated polymer is selected from polyesters, polycarbonates, polyurethanes, polyacrylics, and chloropolymers; preferably polyethylene terephthalate (PET) and polyvinyl chloride (PVC).

3. The method according to claim 1 or 2, wherein said first self-adhesive face is coated with a layer of a pressure-sensitive adhesive comprising a polymer selected from polyacrylics.

4. The method according to any one of claims 1 to 3, wherein said first self-adhesive face is electrostatically charged.

5. The method according to any one of claims 1 to 4, wherein said second face is covered with a print intended to be covered by a layer of graffiti.

6. The method according to any one of claims 1 to 5, wherein said second face is not covered with a print or a protective layer.

7. The method according to any one of claims 1 to 6, wherein said first self-adhesive face is applied to flat surfaces selected from glazed surfaces such as glass, building facades such as concrete facades, walls such as cement, plaster boards, wooden boards, and cardboard sheets.

8. The method according to any one of claims 1 to 7, wherein said first self-adhesive face is applied to three-dimensional surfaces selected from vehicles, building facades, brick walls, stone walls, staircases, mailboxes, and waste bins.

9. The method according to any one of claims 1 to 8, further comprising a step of cutting said polymeric film.

10. The method according to any one of claims 1 to 9, further comprising a step of applying said first self-adhesive face by a user to a new surface and/or a step of applying a protective film over said layer of graffiti or a step of framing said polymeric film.
